# EUROPEAN PATENT SPECIFICATION

(11) **EP 0 643 349 B1**
(45) Date of publication and mention of the grant of the patent: **18.10.2000**
(21) Application number: 94305845.3
(22) Date of filing: 05.08.1994
(51) Int. Cl.: G06F 9/46

(54) **Client-side stub interpreter**
Kundenseitiger Stubinterpretor
Interpreteur des stubs du côté-client

(30) Priority: 10.09.1993 US 119753
(43) Date of publication of application: 15.03.1995
(73) Proprietor: SUN MICROSYSTEMS, INC., Mountain View, CA 94043 (US)
(72) Inventor: Kessler, Peter B., Palo Alto, California 94306 (US); Hamilton, Graham, Palo Alto, California 94303 (US); Gibbons, Jonathan J., Mountain View, California 94043 (US)
(74) Representative: Wombwell, Francis

(56) References cited:
- PATENT ABSTRACTS OF JAPAN vol. 16, no. 78 (P-1317)25 February 1992 & JP-A-03 266 064 (YOSHINORI ET AL) 27 November 1991
- JOURNAL OF PARALLEL AND DISTRIBUTED COMPUTING vol. 11, no. 3 , March 1991 , DULUTH, MN US pages 188 - 197 XP201905 WEI ET AL 'The design of a stub generator for heterogenous RPC systems.'
- 12TH ANNUAL INTERNATIONAL PHOENIX CONFERENCE ON COMPUTERS AND COMMUNICATION March 1993 , ARIZONA, USA pages 495 - 501 XP370521 YUASA AND SINHA 'Network Programming support with object-oriented paradigm.'

## Description

### BACKGROUND OF THE INVENTION

### Field of the Invention

The present invention relates to the fields of distributed computing systems, client-server computing and object oriented programming. Specifically, the present invention is a method and apparatus comprising logic modules, called a *client-side stub generator* and a *client-side stub interpreter*, that have been designed to minimize the memory space required by client-side stubs.

### Background

A key problem in Operating Systems development and maintenance is permitting the introduction of new interfaces and implementation techniques in a way which allows clients and programmers maximum flexibility without loading the operating system down with implementation details. Moreover, this problem becomes more intense when developing object oriented operating systems which have micro-kernel architectures. Micro-kernels typically permit clients to implement complex subsystems at the client level, such as file systems, for example. Nevertheless, basic system processes such as interclient or intercomputer communications are so complex that clients and object implementors should not be concerned with these processes. That is, these inherently "system" type processes are more efficiently done by standard modules, but should be handled in a way which does not require that the base operating system is constrained by these processes.

As a part of the solution to this basic problem for systems which use the object metaphor to define the interfaces between different components of a system, *stubs* and other similar types of intermediate logic modules have been used. Such *stubs* are described as standard modules to handle communications of object calls between remote computers which may be sending other objects as parameters of the calls. These stubs and other similar modules and their relationship to each other are described more fully below within the context of the detailed description of this invention comprising the *stub generator* and *stub interpreter*.

In an object oriented system, an object is a component comprising data and operations which can be invoked to manipulate the data. The operations are invoked on the object by sending calls to the object. Each object has an object type. The object type defines the operations that can be performed on objects of that type. The object operations are implemented independent of the objects themselves. Additionally, one object type may inherit the object operations defined and implemented for other object types. For further description of object oriented design and programming techniques see "Object-oriented Software Construction" by Bertrand Meyer, Prentice-Hall 1988.

In client-server computing, typically there is a set of computers that can communicate with one another through a network connecting the computers. Some of these computers act as providers of services or functionality to other computers. The providers of such service or functionality are known as "servers", and the consumers of such service or functionality are called "clients". The client-server model also generalizes to the case where distinct programs running on the same computer are communicating with one another through some protected mechanism and are acting as providers and consumers of functionality.

In object oriented distributed systems based upon the client-server model, there exist servers that provide object oriented interfaces to their clients. These servers support objects consisting of data and the associated software. Clients may obtain access to these objects and may execute calls on them. These calls are transmitted to the server from the client. At the server these calls are executed via the software associated with the object. The results of these calls are then transmitted back to the client.

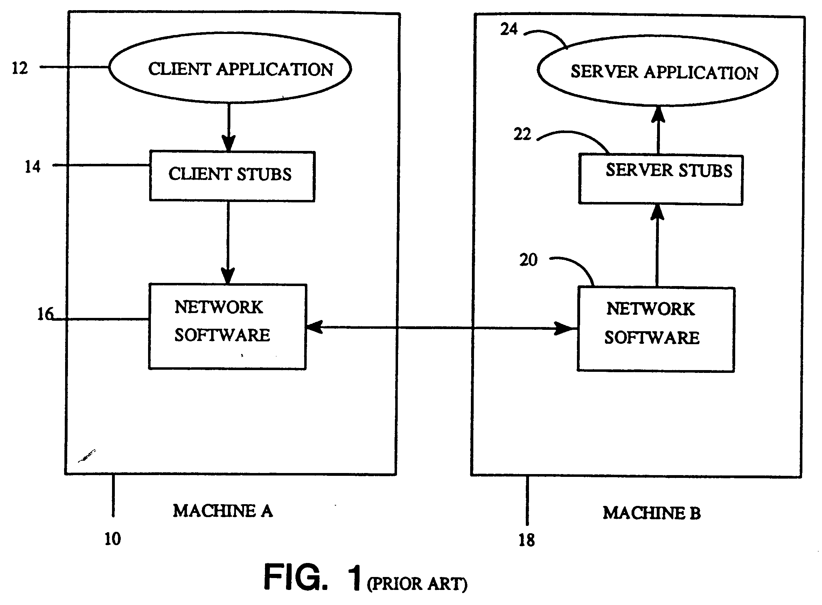

In more modern systems, the application software does not talk directly to the network software. Instead the application software talks to "stubs" (**14 in Figure 1**). The stubs provide a consistent interface to the clients whether there is a network between the client and server or not. There is a distinct stub for each distinct interface that is supported by the system. The stub code is responsible for converting between a specific language-level interface seen by application level software and the standard low-level communication interfaces provided by the network software. For example, the stubs are responsible for taking the arguments to a remote call and putting them into a message suitable for the network software to transmit over the network. Such uses of stubs are described in the section on *Remote Procedure Calls* ("RPC") on pages 349-368 of the book titled "Software Implementation Techniques" by Donald E. Merusi, Digital Press 1992, ISBN 1-55558-090-4.

Because of the number of client-side stubs which are generated in such object oriented, distributed systems it has become clear that a mechanism is needed to reduce the text memory space occupied by the code related to these many client-side stubs.

Accordingly, the present invention provides an apparatus and a method comprising logic modules, called a *client-side stub generator*, a *database of compressed client-side stub execution code* and a *client-side stub interpreter*, that have been designed to minimize the memory space required by client-side stubs while retaining the design of stubs to provide control of the basic mechanisms of object invocation and argument passing that are most important in distributed systems, and which permits the application programmers to be unaware of the specific stubs that are being used for particular objects.

### SUMMARY OF THE INVENTION

The present invention as defined in the appended claims provides an elegant and compact way to provide mechanisms for invocation of objects by client applications and for argument passing between client applications and object implementations, which reduce the memory space required for the client-side stubs, without the client application or the operating system knowing the details of how these mechanisms work. Moreover, these mechanisms functions in a distributed computer environment with similar ease and efficiency, where client applications may be on one computer node and object implementations on another. Additionally the invention is independent of the particular C++ compiler used for generation of the stub code.

A method and apparatus are described for executing a particular stub operation invoked by a client in a computer system by accessing from a first area of computer memory a first portion of code required to execute the stub operation, this first portion of code identified as code which is common to a plurality of different stub methods; and accessing from a second portion of computer memory a second portion of code which code is unique to the particular stub operation invoked. This permits a reduction in the required computer memory because the code common to a plurality of stub methods is stored only once.

Additionally a method and apparatus provide for the process of separating code generated for executing a stub operation into a first portion of code which is common to a plurality of stub methods, and a second portion of code which is unique to each stub operation and for storing this second portion of code into computer memory in a compressed format using byte code representations of the various methods, texts and parameters. A single copy of the portion of code which is common to a plurality of stub methods is contained in a mechanism called a stub interpreter which supplies this portion of common code whenever a stub operation is invoked by a client. The stub interpreter accesses memory to obtain the unique portion of stub code required to complete a stub method whenever one is invoked.

The mechanism used to reduce this memory space comprises a *stub generator* (called "CONTOCC") for generating a data base of compressed client-side stub description files which are stored in computer memory and a *stub-interpreter* which knows how to read these client-side stub description files. CONTOCC reads interface definition language ("IDL") files and generates corresponding C++ files. CONTOCC has the ability to read the IDL data and generate either uncompressed C++ stub files or the special compressed client-side stub interpreter files which contain only those data that are unique to the particular stub method involved in byte coded form.

The stub interpreter logic module receives a target object, arguments related to the particular stub method called and a pointer to the compressed byte code representations of the stub code in the data base of compressed client-side stub description files which are stored in computer memory, and proceeds to execute the object invocation, marshalling or unmarshalling of any return messages as required.

### DESCRIPTION OF THE DRAWINGS

The objects, features and advantages of the system of the present invention will be apparent from the following description in which:
**Figure 1** illustrates the prior art relationship of client and server applications to stubs and network software.
**Figure 2** illustrates the major system components of the Stub Generator/Interpreter.
**Figure 3** illustrates the relationship between stub objects, subcontract objects and server application objects.
**Figure 4** illustrates remote object invocation using subcontract.
**Figure 5** illustrates object invocation on a single machine using subcontract.
**Figures 6-9** illustrate a flow chart of an exemplary use of the inventive method of subcontract.
**Figures 10a & 10b** illustrate the SPRING view of objects versus the prior art view of objects.
**Figure 11** illustrates an exemplary layout of the client-side stub description.

### NOTATIONS AND NOMENCLATURE

The detailed descriptions which follow may be presented in terms of program procedures executed on a computer or network of computers. These procedural descriptions and representations are the means used by those skilled in the art to most effectively convey the substance of their work to others skilled in the art.

A procedure is here, and generally, conceived to be a self-consistent sequence of steps leading to a desired result. These steps are those requiring physical manipulations of physical quantities. Usually, though not necessarily, these quantities take the form of electrical or magnetic signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to these quantities.

Further, the manipulations performed are often referred to in terms, such as adding or comparing, which are commonly associated with mental operations performed by a human operator. No such capability of a human operator is necessary, or desirable in most cases, in any of the operations described herein which form part of the present invention; the operations are machine operations. Useful machines for performing the operations of the present invention include general purpose digital computers or similar devices.

The present invention also relates to apparatus for performing these operations. This apparatus may be specially constructed for the required purposes or it may comprise a general purpose computer as selectively activated or reconfigured by a computer program stored in the computer. The procedures presented herein are not inherently related to a particular computer or other apparatus. Various general purpose machines may be used with programs written in accordance with the teachings herein, or it may prove more convenient to construct more specialized apparatus to perform the required method steps. The required structure for a variety of these machines will appear from the description given.

### DESCRIPTION OF THE PREFERRED EMBODIMENT

The following disclosure describes a unique and innovative method and apparatus for reducing the total memory space occupied by computer code that performs stub operations in a computing environment that comprises object-oriented, client-server, distributed computing operations.

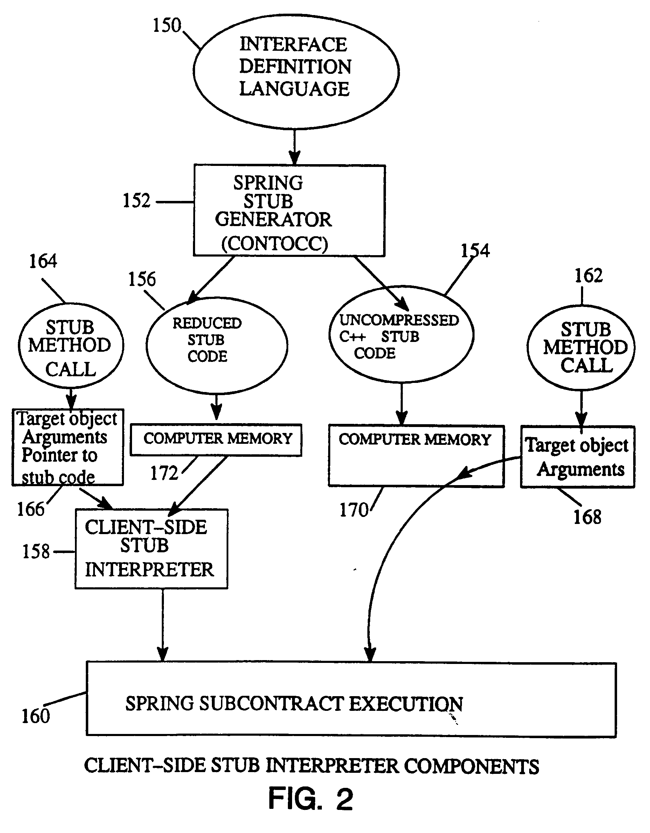

Referring now to **Figure 2**, the invention is depicted. The invention comprises a *client-side stub generator* ("CONTOCC") **152** which receives Interface Definition Language ("IDL") code **150** as input, and, if required, generates the data base of reduced code and tables for client-side stubs **156**, or generates normal C++ stub code **154** as required, and a run-time *client-side stub interpreter* **158** which can execute the client-side stub functions of marshalling, unmarshalling and object invocation. A normal stub method call **162** is indicated which passes the target object and arguments to the method being invoked **168**, and which executes the method via the normal stub code stored in computer memory **170**. Also shown is a stub method call **164** of the type used with the stub interpreter **158**, which also passes the target object and arguments to the method being invoked, but in addition passes a pointer to the reduced stub code **166** in computer memory **172**, whereby the stub interpreter **158** can execute the method call. These components of the invention are described more fully below after a brief description of the operating environment in which the preferred embodiment of the invention is implemented.

In the following description, for purposes of explanation, specific data and configurations are set forth in order to provide a thorough understanding of the present invention. The preferred embodiment described herein is implemented in a computing environment which includes a new type of object, termed a "spring object," which includes a method table, a subcontract mechanism and a data structure which represents a "subcontract's" local private state, all of which is operating under the control of the Sun Microsystems, Inc. ("Sun") *SPRING* Object Oriented Operating System ("SPRING"). Those skilled in the art will recognize that the *client-side stub* *interpreter* and the underlying process may be practiced without the specific details described herein and may be implemented in various computer systems and in various configurations, or makes or models of tightly-coupled processors or in various configurations of loosely-coupled multiprocessor systems.

A SPRING object is an abstraction that contains state and provides a set of methods to manipulate that state. The description of the object and its methods is an *interface* that is specified in the *interface definition language* ("IDL"). The interface is a strongly-typed contract between the implementor (*server*) and the *client* of the object.

A SPRING *domain* is an *address space* with a collection of *threads*. A given domain may act as the server of some objects and the clients of other objects. The implementor and the client can be in the same domain or in a different domain.

Since SPRING is object-oriented it supports the notion of *interface* inheritance. SPRING supports both notions of *single* and *multiple* interface inheritance. An interface that accepts an object of type "foo" will also accept an instance of a subclass of "foo". For example, the *address_space* object has a method that takes a *memory_object* and maps it in the address space. The same method will also accept *file* and *frame_buffer* objects as long as they inherit from the memory_object interface.

The SPRING kernel supports basic cross domain invocations and threads, low-level machine-dependent handling, as well as basic virtual memory support for memory mapping and physical memory management A SPRING kernel does not know about other SPRING kernels-all remote invocations are handled by a *network proxy* server. In addition, the virtual memory system depends on external pagers to handle storage and network coherency.

A subcontract mechanism is associated with each object. Each subcontract contains a client-side portion and a related server-side portion. Each object type has an associated subcontract. The client-side portion of a subcontract has the ability to generate a new spring object, to delete a spring object, to marshal information about its associated object into a communications buffer, to unmarshal data in a communications buffer which represents its associated object, to transmit a communications buffer to its associated server-side subcontract, which includes either transmitting an object from one location to another or transmitting a copy of an object from one location to another. The server-side portion of the subcontract mechanism includes the ability to create a spring object, to provide support for processing incoming calls and related communications buffers and to provide support for revoking an object.

### The spring object model

SPRING has a slightly different way of viewing objects from other distributed object oriented systems and it is necessary to clarify this before discussing the details of the stub interpreter, stubs and subcontract.

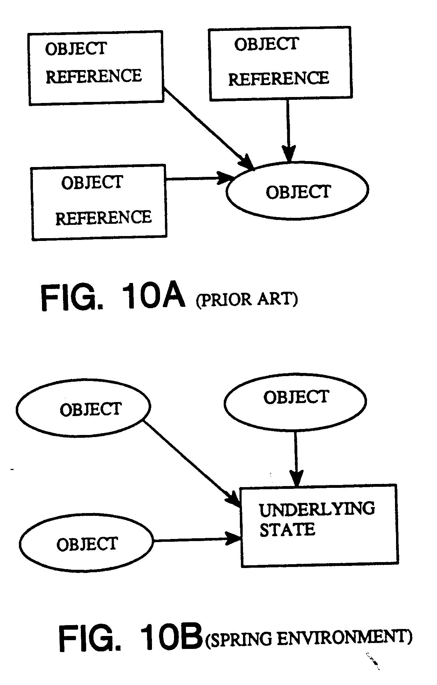

Most distributed systems present a model wherein objects reside at server machines and client machines possess "object handles" that point to the object at the server. (See figure **10a**.) So clients pass around object handles rather than objects.

SPRING presents a model wherein clients are operating directly on objects, not on object handles. (See figure **10b**.) Some of these objects happen to keep all their interesting state at some remote site, so that their local state merely consists of a handle to this remote state. An object can only exist in one place at a time, so if we transmit an object to someone else then we cease to have the object ourselves. However, we can also copy the object before transmitting it, which might be implemented such that there are now two distinct objects pointing to the same remote state.

So whereas in most systems, one might talk of several clients having object handles that reference some remote object, in SPRING one would talk about several clients having objects that reference the same remote state.

For most server-based objects this distinction is mainly one of terminology. However SPRING also supports objects which are not server based, or where the state of the object is split between the client and the server. In these cases it is much more convenient to regard the client as possessing the true object, rather than merely possessing a pointer.

### The interface definition language

The unifying principle of SPRING is that all the key interfaces are defined in a standard interface definition language. This language is object-oriented and includes support for multiple inheritance. It is purely concerned with interface properties and does not provide any implementation information.

From the interface definition language it is possible to generate language-specific stubs. These stubs provide a language-specific mapping to the SPRING interfaces. For example, in the main implementation language, C++, Spring objects are represented by C++, objects. When a method on a stub object is invoked, it will either perform a local call within the current address space or forward the call to another address space, which may be on a different machine.

### STUBS and The Subcontract Mechanism

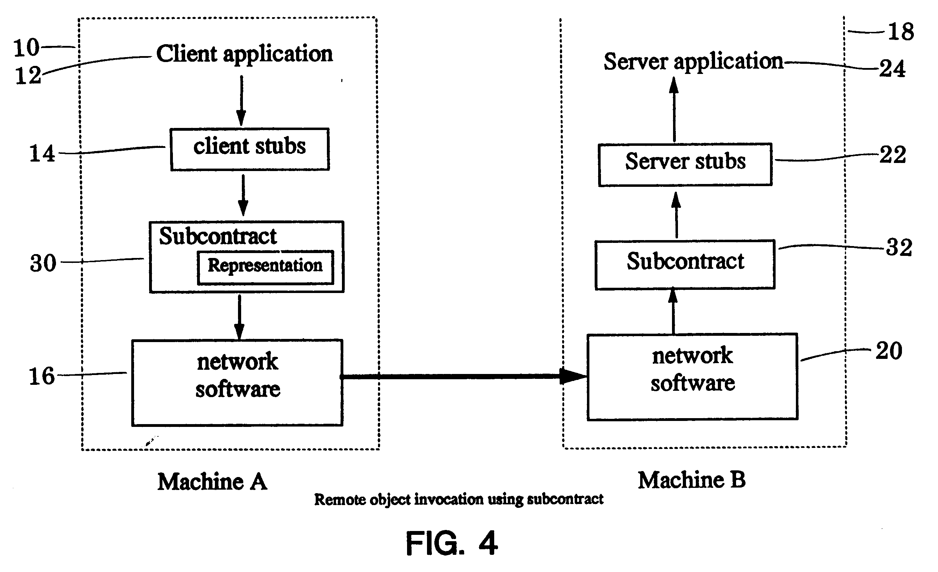

Referring now to **Figure 4**, in the environment of the present invention, the client application **12** on a machine **10**, issues calls to the appropriate client-side stub **14**, who calls upon a client-side portion of a "Subcontract" **30**, which subcontract talks to the network software **16** which communicates with its counterpart network software **20**, generally on another machine **18**. This server-side network software **20** transfers incoming messages to the server-side portion of subcontract **32** who in turn delivers the data to the server-side stub **22** which passes the data to the server application **24** which is typically the object implementation. As indicated, Subcontract fits between the stubs and the network software. The stubs use a subcontract to perform remote calls and similarly the subcontract then uses the network software to perform the actual call. Different subcontracts will implement different kinds of remote communication protocols (for replication, for caching, etc) on top of the standard communications software.

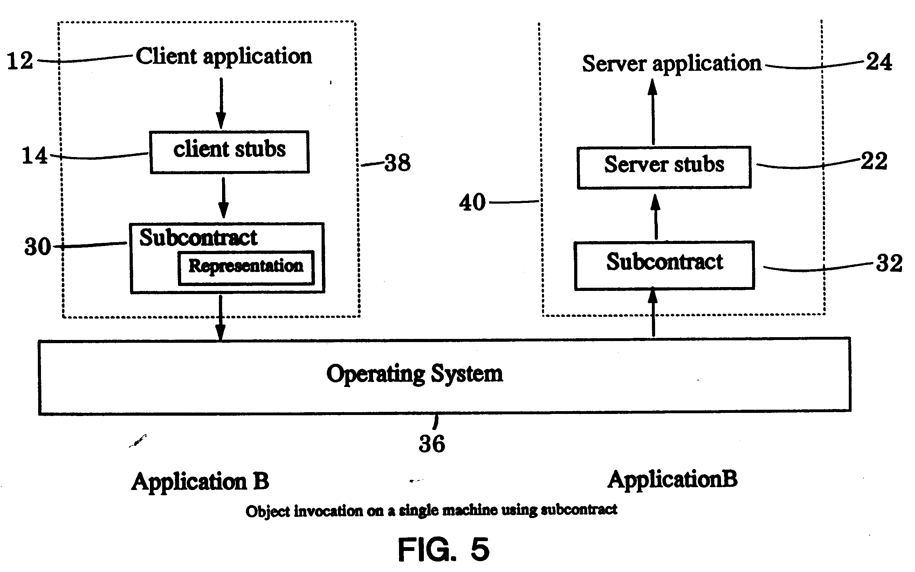

Within a single computer, different applications may also use subcontract to communicate. Referring now to **Figure 5**, the client application **12** is in an application space **38** and issues calls on the appropriate client-side stub **14**, who in turn calls the appropriate subcontract **30**. The subcontract **30** transfers its communications to the operating system **36**, which relays them to the server-side subcontract **32**, who in turn gives the data to its server-side stub **22** who passes the data to the server application **24**. In this case inter-process communication primitives provided by the operating system **36** replace the inter-machine communication mechanisms provided by the networking software (**16 & 20 in Figure 4**).

Even within a single application running in a single address space, client-side and server-side stubs and subcontract may be used to communicate between different components of the application.

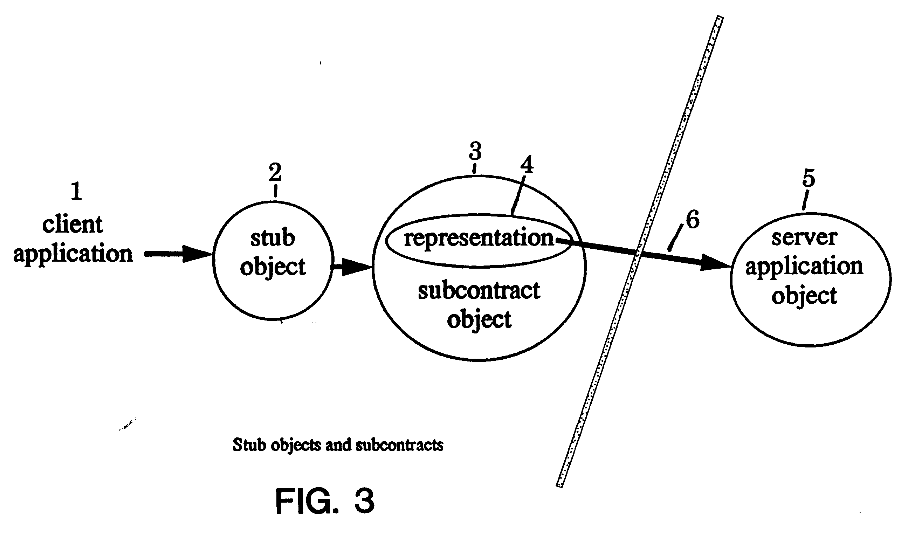

Now, referring to **Figure 3**, looking at things from an object-oriented perspective, the client application **1** operates in terms of "stub objects" **2**. Each of these stub objects **2** contains a subcontract object **3** whose internal state **4** (known as its "representation") may contain some form of pointer **6** to the real underlying state **5**, which may reside in the same address space, in another address space on the same machine, or on another machine entirely. The underlying state will typically be itself represented as an object **5** in the server application's address space.

A Spring object is perceived by a client as consisting of three things: a method table, which contains an entry for each operation implied by the object's type definition; a *subcontract* description which specifies the basic subcontract operations described in the next section; and some local private state, which is referred to as the object's *representation*.

A client interacts with an object by invoking methods on what appears to be a C++ object. The code for this object has in fact been automatically generated and it transforms the method invocations into calls on either the object's regular method table or on its subcontract operations vector. How these methods achieve their effect is hidden from the client but involve calls to the appropriate stub method, which operations are described below.

If the object is implemented by a remote server, then a typical arrangement will be that the subcontract implements the machinery for communicating with the remote server, while the method table consists of pointer to stub methods whose sole duty is to marshal the arguments into a buffer, call the subcontract to execute the remote call and then unmarshal any results from the reply buffer. SPRING provides an automatic *stub generator* ("CONTOCC") to generate appropriate stubs from the interface definition language. It is this automatic stub generator and the *client-side stub* *interpreter process* which is the subject on this invention disclosure. In order to properly describe the role of the invention, it is necessary to further describe how the client and server side stubs are used by the system.

In the remote server there will typically be some subcontract code to perform any subcontract work associated with incoming calls and some server side stub code that unmarshals the arguments for each operation and calls into the server application. This server stub code is also automatically generated by CONTOCC. However, as is described later, the stub interpreter of the preferred embodiment is directed only to client-side stubs, although those skilled in the art will recognize that the same principles can be used with server-side stubs.

If an object is implemented entirely locally, then it is possible to avoid using stub methods and to provide implementation methods that can be placed directly into the method table. SPRING provides support for generating method tables in this case.

### Basic subcontract mechanisms

The client side subcontract operations are:
. copy
. consume
. unmarshal
. marshal
. marshal_copy
. invoke
. invoke_preamble
. narrow
. object_type_id
. object_manager_id
. is_null

These subcontract operations and detailed descriptions thereof are described in the co-pending application Ser. No. 07/995,863 filed by Graham Hamilton, Michael L. Powell, James G. Mitchell and Jonathan J. Gibbons for A Method and Apparatus for Subcontracts in Distributed Processing Systems which is hereby incorporated herein by reference. An example of subcontract usage and the interaction of the client and server side stubs with the subcontract mechanism are described herein briefly.

### An example of stub and subcontract use

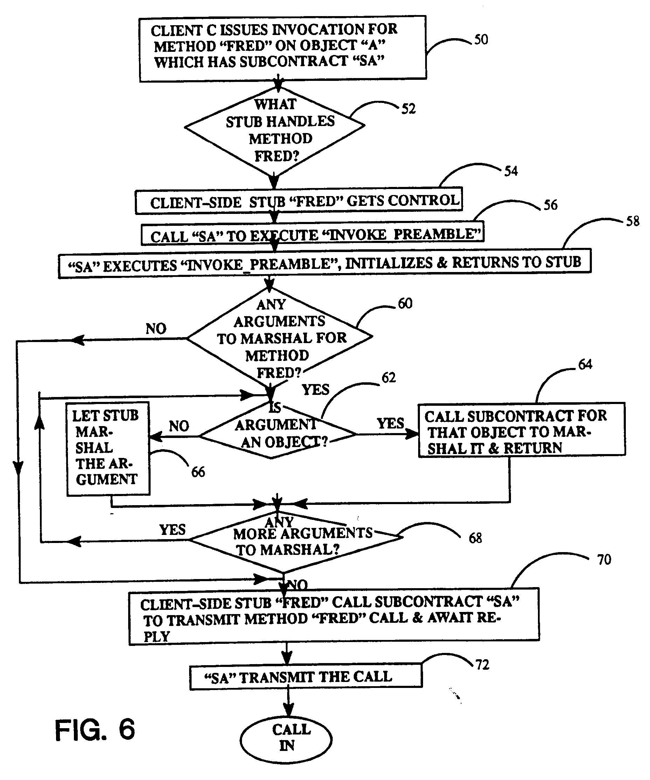

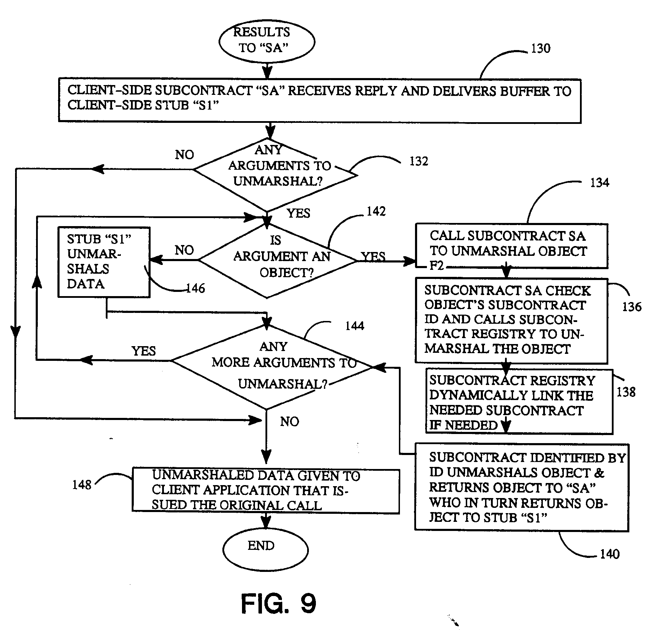

Before describing the present invention in detail, it is useful to consider the sequence of stub and subcontract operations performed when invoking a remote object. Note that this is only an example, and those skilled in the art will realize that subcontracts as defined herein and in the copending reference indicated above, can be made to do much more exotic things than are described here. Please refer in the following discussion to **Figures 6 through 9**.

Assume that we have an object A which supports a method Fred and which uses a subcontract SA.

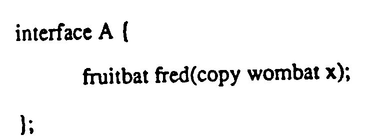

The return type fruitbat is known to use some subcontract SF.

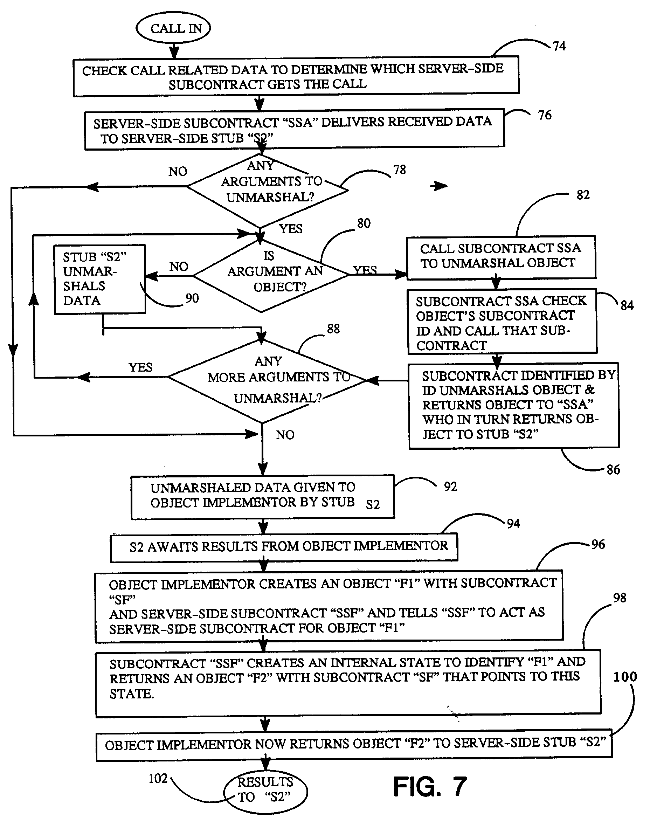

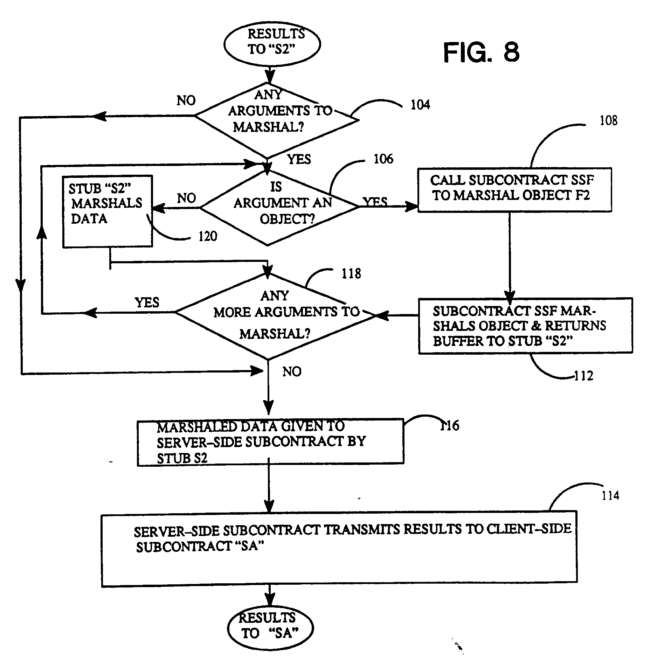

Say we have an object X of type wombat which uses a subcontract SX, and we call A's fred method passing in X as an argument **50**:
1. First we enter the client-side stub method for "fred" **52,54**.
2. The client-side stub code calls A's invoke_preamble operation **56**.
3. The SA invoke_preamble code performs any necessary initialization and returns **58**.
4. The client-side stub code then attempts to marshal the argument object X as a copy argument, by invoking X's marshal_copy operation. In **Figure 6** this proceeds as follows: client-side stub fred makes a test to see if there are any arguments to be marshaled **60**. Since the answer is yes, then stub fred tests the arguments to see if any are objects **62**. Finding object X and knowing that X has a subcontract SX, stub fred calls subcontract SX to marshal object X **64**.
5. The SX marshal_copy code arranges for information describing a copy of X to be put in the argument buffer and returns to stub fred **64**.
6. The client-side stub code has now marshalled all the arguments and is now ready to actually execute the call. So it calls A's invoke operation **70**.
7. The SA invoke method performs the work necessary to transmit the argument buffer to the target server, with a request that an invocation on the fred method occurs on the server state for the object A, and then awaits a result buffer back from the server **72**.
8. Referring now to **Figure 7**, the call is received by the target server and the data delivered to server-side subcontract SSA who delivers the buffer to server-side stub S2 **74,76**. Stub S2 checks to see if there are arguments to unmarshal **78** and then to see if any of the arguments are objects **80**. Finding that there is an object X to be unmarshaled, server-side stub S2 invokes the unmarshal operation of the SSA subcontract **82**. Subcontract SSA checks object X's subcontract id to find that it has subcontract SX associated with it **84**. Subcontract SSA then invokes the unmarshal operation on subcontract SX **84**, and subcontract SX unmarshals object X returning it to subcontract SSA who in turn returns it to stub S2 **86**. Server-side stub S2 having completed the unmarshaling of all arguments received, passes the call and arguments to the targeted object implementation **92**, and awaits a reply **94**. The object implementor processes the call and creates an object fruitbat-1 with subcontract SF and a server-side subcontract SSF and instructs subcontract SSF to act as server-side subcontract for subcontract SF **96**. Subcontract SSF creates an internal state to identify F1 **96**, and returns object F1 that points to this state **98**. Object implementor now returns object F1 to server-side stub S2 for return to the client **100**. Referring now to **Figure** **8**, Stub S2 now must go through the marshaling of arguments routine again to marshal object fruitbat **104,106,108, 110,** and **112**, with subcontract SSF **112** returning the marshaled arguments to stub S2 who delivers the marshaled data to the server-side subcontract SSA for retransmission to client-side subcontract SA **116, 114**.
9. The client-side stub code now receives the result buffer from the SA invoke method **130** and wishes to start unmarshalling the results. In this case the result is known to be an object of type fruitbat, which has subcontract SF, so client-side stub fred (SA) invokes the unmarshal operation of the SF subcontract, passing in the regular method table for the type fruitbat. The invocation steps are shown in blocks **142,134,136,138** and more fully described in the discussion on compatible objects in the above referenced co-pending application.
10. The SF subcontract unmarshal code now attempts to unmarshal an object from the result buffer. It combines the information from the result buffer with its own subcontract method table and with the regular method table it was passed to form a new SPRING object F2, which it passes back to the client-side stub **140**.
11. The client-side stub fred has now completed its task and can return the result object to application level **148**.

The process has been driven by the client-side stub code for A's fred method, but has also involved the subcontracts for the target object, for the argument object and for the result object.

### The client-side stub generator and interpreter.

As indicated in this exemplary description of the usage of stubs and subcontracts, the client-side stub is the primary interface to the client. Because of the number of client-stubs which are generated in an object oriented, distributed system it became appropriate to consider ways of reducing the text memory space occupied by the code of these client-side stubs. Referring again to **Figure 2**, the mechanism used to reduce this memory space comprises a *stub generator* (called "CONTOCC") **152**, a data base of client-side stub description files (reduced stub code) **156** and a *stub-interpreter* **158** which knows how to read these client-side stub description files. CONTOCC **152** reads interface definition language ("IDL") files **150** and generates corresponding C++ files. CONTOCC **152** has the ability to read the IDL data **150** and generate either normal C++ stub files **154** or the special client-side stub interpreter files **158** described in more detail below.

### Client-side stubs

Client-side stubs are generated by CONTOCC to provide C++ methods that clients can call that will result in the execution of operations on IDL objects. The stubs consist of a mechanism for handling multiple inheritance, and a mechanism for performing SPRING object invocation.

SPRING object invocation is achieved by marshaling the arguments to the call into a linear data structure, called a transport, invoking a method on the distinguished object to the call, and unmarshaling the results of the call (or handling an exception, if one is raised). Because of Spring's subcontract mechanism, the client-side stubs are not responsible for the details of marshaling or unmarshaling parameter objects, nor are they responsible for the actual invocation. The client-side stubs are responsible for making sure that the arguments and results get marshaled and unmarshaled in the appropriate order, and for calling the subcontract of the distinguished object to perform the operation invocation.

For an example, the IDL interface: 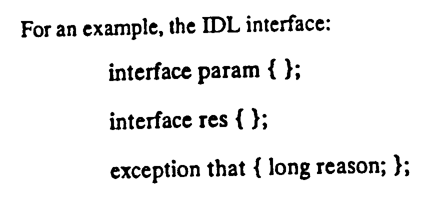 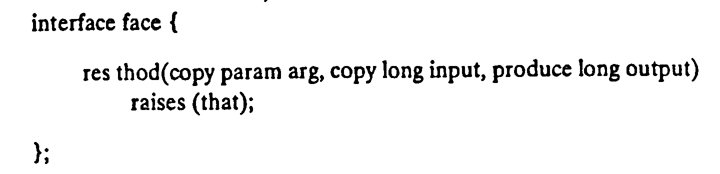 has one method (thod) that takes one argument of type param (arg), one argument of type long (input), produces one long argument (output), and returns a result of type res (unnamed), unless it raises an exception (that), in which case a long (reason) will be passed as a parameter of the exception. The CONTOCC translator used to (always, and still can, optionally) produce the following code as part of the client-side stub for the above interface:

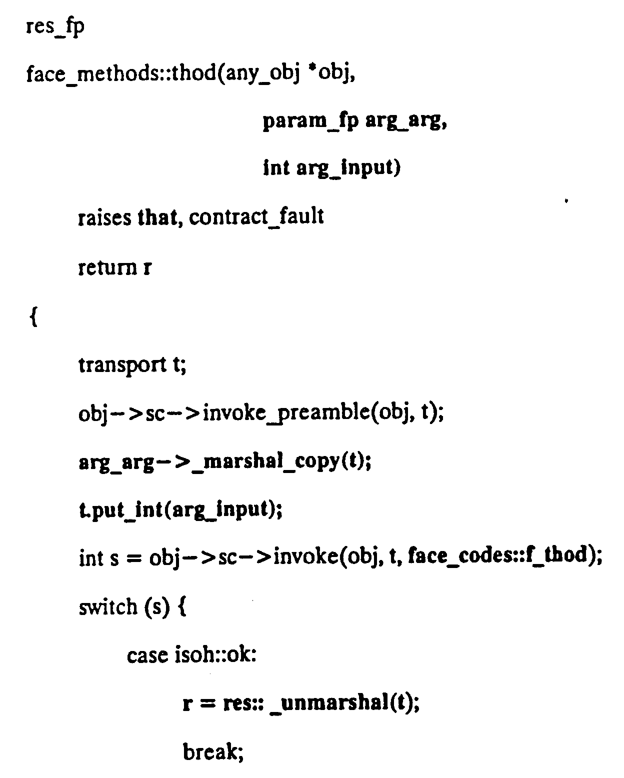

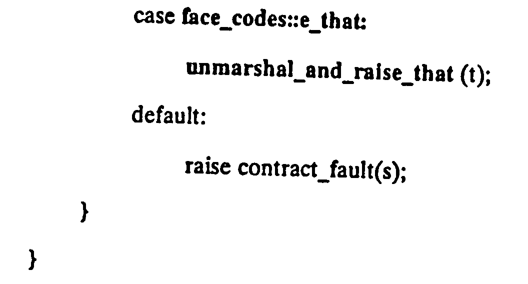

The important thing to realize about this code is that much of it is identical in all such client-side stub methods, and that the changeable parts can be described reasonably succinctly. Those observations led to the idea of an interpreter for client-side stubs.

The variable parts of a client-side stub method are shown above in bold face font. The types and modes of the parameters will vary from one stub method to the next, though the distinguished object is always of type "any_obj*", and is always the first parameter. The exceptions raised by different stub methods may be different. The different parameters have to be marshaled in different ways, though the marshaling method for library types is well known, and the marshaling for objects and constructed types (array, struct, *etc*.) is accomplished by calling a marshal method for the type. Invocation is done by calling a subcontract method: the only variable here between stub methods is the identification of the operation being invoked. Unmarshaling varies just like marshaling: again it is well-known for library types, and any objects or constructed types are unmarshaled by calling unmarshal methods. Any exceptions that need to be raised are encoded as a return code from the invoke call, and unmarshaling the parameters to the exception and raising it are encapsulated in a method. (It is noted, however, that unmarshaling the parameters to an exception and raising the exception was previously generated inline, but making that a separate method in the preferred embodiment potentially saves space even in the C++ coded stubs.)

### An Interpreter for Client-side stubs

Given the limited variability that was observed in C++ coded stubs, an interpreter is provided, whose main body is the fixed parts of a C++ coded stub, and which consults a table describing the variable parts and acts accordingly given that description. Since saving space was the primary objective of using a table driven stub interpreter, in the preferred embodiment, the table was made as compact as practical.

The description of a stub consists of several kinds of information: types and modes of arguments, marshal and unmarshal methods for parameters and results that need those methods, the identification of the operation to be performed, and a mapping from exception identifiers to methods that unmarshal the parameters of the exception and raise it. In addition, there are various other data that are needed, as will be detailed below. The descriptions of collections of stubs include a fair amount of common information, so the descriptions for a module (a collection of interfaces, which are collections of operations) are lumped together into a single table.

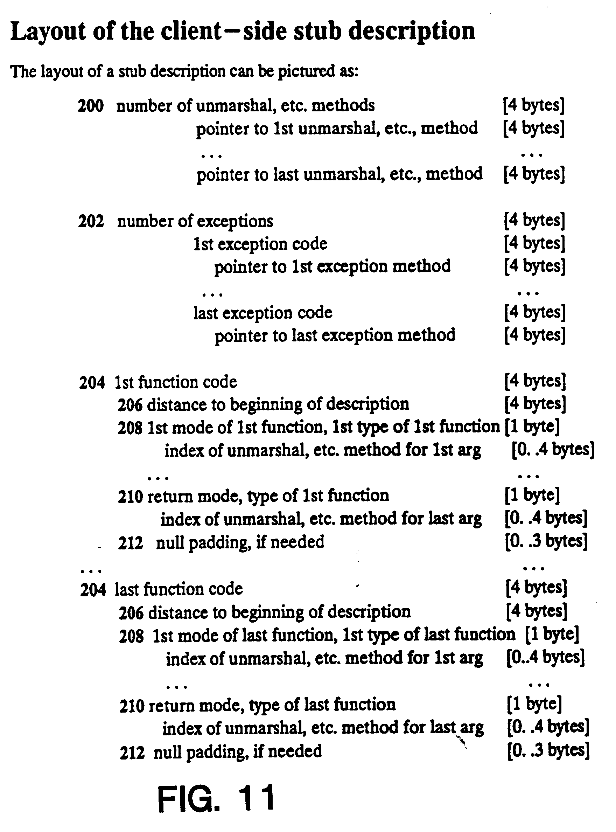

In the preferred embodiment, there are currently 9 parameter passing modes that are recognized by the stub interpreter: copy, share, consume, produce (also used for "out"), borrow, in, in-out, and return. There are 16 parameter types that are recognized by the stub interpreter: bool, octet, char, short, long, long long, unsigned short, unsigned long, unsigned long long, float, double, string, struct (also used for unions and builtins), array, object, and void (used only for void returns). Each of the mode and the type can be encoded in 4 bits, and the combinations fit conveniently in a byte. Each parameter (and the return type) to a method is encoded as at least one byte. The parameter descriptors for all the parameters of an operation are stored one after another. The parameter description for each operation is terminated by a byte containing 0x00, and padded (if necessary) with bytes containing 0xff to the next 4-byte boundary, for ease of addressing. (While the presently preferred embodiment uses this null byte to terminate the method's parameter description, an alternate embodiment is possible which could save this byte as well as up to three bytes of padding. This alternate method of recognizing the end of a method's data in this table is possible because the stub interpreter knows that it is at the end of a description when it sees a byte with the mode "return.") Finally, the operation identifier is stored as a 4-byte unsigned integer before the bytes describing the parameters of the operation. An exemplary picture of the layout of the client-side stub description is shown in **Figure 11**.

Library types are marshaled and unmarshaled by well-known code at the appropriate points in the stub interpreter. Object parameters are marshaled by calling through to their appropriate subcontract marshal method (marshal_copy or marshal_consume, depending on the mode in the descriptor). When objects need to be unmarshaled, the address of their unmarshal method is stored elsewhere in the description, and the index of that address is stored after the (mode, type) pair. The same solution is adopted for finding the marshal and unmarshal methods for parameters of constructed types. If both a marshal and unmarshal method are needed for the parameter (*e.g.*, it is a borrow parameter), the marshal method is stored at the given index, with the unmarshal method following it, accessed at the given index + 1.

These indices (and any other indices in the descriptors) are usually small (since the descriptors are usually small), so the following encoding is used for them: if the index fits in 7 bits, it is stored in one byte, with the most-significant bit cleared; if it does not fit in 7 bits, the most-significant 7 bits are stored in the first byte, with the most-significant bit set, and successive 7-bit chunks of the index are stored in successive bytes, the most-significant bit of each byte indicating that less-significant 7-bit chunks are needed to complete the number.

If a struct, union, or builtin parameter is produced or returned by the call, the stub interpreter needs to call an initializer for the type before calling the unmarshal method. In that case, the address of an initializer method is stored in the description, after the unmarshal method. For struct, union, and builtin parameters that are passed consume, the stub interpreter also needs to call a method to clean up the parameter after it is marshaled. The address of a destroyer for the parameter is stored in the description, after the marshal method. The actual order of the methods in the description for struct, union, or builtin parameters is: marshal_consume, unmarshal (possibly accessed at marshal_consume + 1), destroyer (accessed at marshal_consume + 2), and initializer (accessed at unmarshal + 2).

In the preferred embodiment, no checking is done on the method addresses used by the stub interpreter to call marshal, unmarshal, initializer, or destroyer methods. The stub generator is assumed to have gotten the right methods into the expected slots and filled in the indices correctly. In fact, the stub interpreter does not distinguish between marshal_consume and marshal_copy methods for parameters of constructed types. It assumes it is given the index of the appropriate method in the table.

All the exceptions that can be raised by a module are gathered together into a map from exception identifiers to addresses of the methods that unmarshal any arguments to the exception and raise the exception. When the stub interpreter detects that an exception has been raised, it searches the table for the exception identifier and calls the corresponding method to raise the exception. A method call was used instead of having the stub interpreter itself raise the exception because a way to raise arbitrary exceptions from the stub interpreter itself is difficult to organize.

Referring again to **Figure 11**, for compactness, the various bytes and tables describing a module are stored contiguously, so that a single index into the description is enough to find all the information needed for any particular operation invocation. First we store the table of unmarshal, etc., methods **200**, prefixed by the number of entries in the table. Next comes the table of exceptions **202**, again prefixed by the number of entries. Then come the actual method descriptors themselves **204**, each consisting of the operation identifier; an index **206**, which is used to get from the operation description to the tables at the front of the description; followed by the bytes and indices **208** that describe the parameters to the operation. These bytes include a description of the return type of the function **210**. Null padding **212**, if required, follows each operation byte group to make those descriptors fill a multiple of 4 bytes. Each function description includes at least the function code **204**, the distance back to the beginning of the description (to access the tables of methods) **206**, and a descriptor for the return type of the function **210**. The minimum function descriptor is 12 bytes, for a function with up to 3 unconstructed arguments an an unconstructed return value. If a type does not need an index to unmarshal, etc methods, then the index is omitted. The description of the example IDL interface above is:

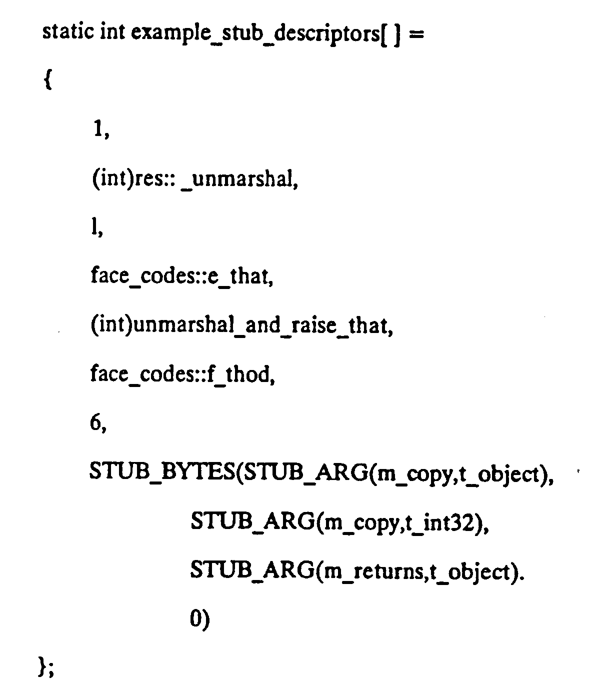

### Preferred Embodiment Implementation details

The stub interpreter is mostly straightforward C++ code. This section explains the details used in the preferred embodiment.

When CONTOCC is told to generate client-side stubs using the interpreter, it still generates a method for the client to call, but that method simply calls the stub interpreter. The purpose of the method is to isolate the client from the existence of the interpreter, e.g., by giving the client a proper C++ method declaration to call.

### Polymorphic return types

The stub interpreter needs to be able to return various types of results, as if it were the various C++ coded stubs. Ordinary C++ code can only return the type it is declared to return. In the preferred embodiment, the SPRING operating system, of which this invention is a part, is designed to run on SPARC® architecture based systems. (SPARC is a registered trademark of SPARC International and is an acronym for "Scalable Performance ARChitecture" based upon a RISC computer architecture developed by Sun Microsystems, Inc.) On the SPARC architecture, the conventions for returning various different types of results require putting those results in various different places (e.g., registers for most results, pre-allocated memory for others, *etc.*). (See Appendix D, "Software Considerations", The SPARC Architecture Manual, version 8, Prentice Hall, 1992, ISBN 0-13-825001-4.)To accomplish polymorphic returns, the stub interpreter resorts to as small number of assembler methods. These methods take the various kinds of return results as parameters and put them in the conventional places for return results. These methods are actually inlined, and do not allocate a register window or stack frame, so they can access the registers and stack frame of the interpreter itself.

### Polymorphic, variadic, parameter types

The stub interpreter needs to access the same parameters as would be passed to the C++ coded stubs. The interpreter cannot know before hand the number or types of the parameters that are passed to the client-side stub. In addition, the interpreter needs to get a pointer to the appropriate entry in the operation descriptions for the method being invoked. In the preferred embodiment, both of these problems are solved by a kind of tail call from the C++ method the client calls to the stub interpreter.

A client of the above example interface would call a method defined as:

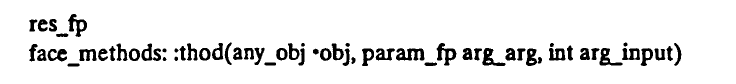

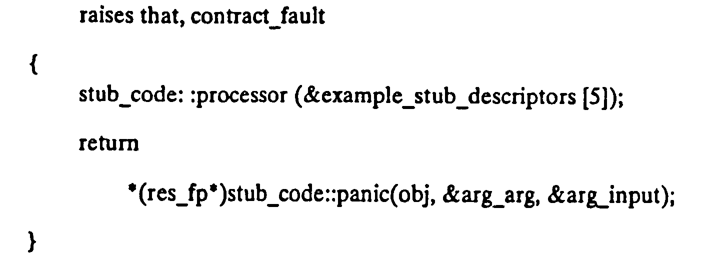

The purpose of the return statement is to keep the parameters to this method live across the first line of code, while generating as little code as possible. The return statement is never reached. (That is, if everything goes according to plan. If that line is reached, the system panics.) The purpose of the first line of code is to transfer control to the stub interpreter itself, passing it the address of the description for the operation to be invoked.

When control is transferred to the stub interpreter, the arguments to the client-side stub (including the distinguished object, *etc*.) are in the first several in registers or in the frame of the caller in the usual SPARC calling convention. (See the above reference to Appendix D of the SPARC Architecture Manual.) The address of the description for the operation is in the first out register. Note that in this preferred embodiment, copying the arguments to the client-side stub from one register window to the next has been avoided. In order not to lose the arguments from the in registers, the stub interpreter does not allocate a new register/memory frame. Instead it extends the memory frame of the client-side stub as needed for the local variables of the interpreter. (Extending the memory frame without pushing a register frame is accomplished by having the C++ compiler generate assembler code for the stub interpreter and changing the save instruction for the interpreter method to an add instruction.) In order not to lose the address of the operation description from the out register, the first thing the stub interpreter does is copy that address to a local register variable. Thus, we are running in the stub interpreter with the arguments in the usual registers and having passed the address of the operation description in one jump, one add, and one register copy. Since the stub interpreter is running in the register frame of the client-side stub, the methods that return the polymorphic return values return from the stub interpreter directly to the client code (*i.e.*, without executing the panic in the client-side stub).

In the preferred embodiment the stub interpreter has to access the arguments to the client-side stub as it finds out what their types are from the byte codes in the description data base. The first thing the interpreter does with the arguments to the client-side stub is to copy the arguments from the in registers to the space allocated for them in the client's (caller's) frame, so they can be addressed sequentially along with any arguments passed in memory. The interpreter is designed to handle the standard conventions for passing various C++ elements (*e.g.*, structs are passed by reference, *etc.*), and the conventions for the various IDL parameter passing modes (*e.g.*, borrow parameters are passed by reference, *etc.*). In that way it can access the arguments to the client-side stub appropriately as it processes the byte code description.

The interpreter itself is essentially two loops over the byte code description. The first loop examines each byte code to see if it requires marshaling any arguments. Then the indicated operation is invoked on the distinguished object and the return code is examined. If the operation succeeded, the second loop over the byte code description determines if any results need unmarshaling. When this second loop examines the byte code describing the return type of the operation, the appropriate polymorphic return method is called to return from interpreter to the client. If the operation invocation failed, the return code is used to map to a method that will unmarshal the parameters to, and raise, the appropriate exception.

There is no conceptual problem with building an interpreter for server-side stubs. However, this was not done in the preferred embodiment for several reasons.

Whereas a domain might be a client of a larger number of services, it is typically a server for only a small number of services. Thus, while the domain might need many client-side stubs, it would need only a few server-side stubs. Therefore, reducing the space occupied by server-side stubs would have a relatively smaller benefit than reducing the space occupied by client-side stubs.

It was possible to figure out the calling environment of the client-side stubs without too much knowledge of the conventions of the C++ compiler beyond the usual calling conventions on the SPARC. In contrast, the server-side stubs have to call to the implementations of the server methods, typically through C++ vtables. Since vtable dispatch is subject only to the whims of the C++ compiler writer, it was not deemed desirable to be tied to a particular C++ implementation.

## Claims

1. A method for executing a particular stub operation invoked by a client in a computer system so as to reduce the amount of memory space required for client-side stubs, characterised by the steps of:
accessing from a first area of computer memory a first portion of code required to execute said stub operation by invoking a stub interpreter (158) to execute said stub operation, said stub interpreter (158) supplying said first portion of code whenever said stub operation is invoked, said first portion of code identified as common to a plurality of different stub operations;
accessing from a second area of computer memory a second portion of code required to execute said stub operation, said second portion of code identified as unique to said particular stub operation, and said second portion of code being stored in a compressed format; and
executing said stub operation at run-time by interpreting said first and second code portions without explicit C++ code for a method, argument and exception of said stub operation.

2. The method described in claim 1, characterised by the additional steps of:
separating code generated to execute a stub operation into a first portion of code as described in claim 1, and a second portion of code as described in claim 1;
using a stub interpreter (158) to contain a copy of said first portion of code, said stub interpreter (158) supplying said first portion of code whenever a stub operation is invoked by a client; and
accessing said second portion of code by said stub interpreter (158) as required whenever a particular stub operation is invoked by a client.

3. The method described in claim 2, wherein the step of compressing said second portion of code is creating encoded representations of said variable portion of code of said stub operations to further reduce said computer memory space required for client-side stubs.

4. The method described in claim 3, wherein said encoded representations of each stub operation is characterised by:
encoded representations for an operation identifier;
encoded representations for a parameter mode and parameter type;
encoded representations for a return type of an operation;
encoded representations for pointers to methods needed to marshal, unmarshal, initialise, and cleanup a parameter and return type; and
encoded representations for each exception and for pointers to raise said exceptions.

5. The method described in claim 4, wherein said step of generating said variable portion of code which is unique to each of said stub operations for storage in computer memory is characterised by the steps of:
reading interface definition language ("IDL") code (150) for a stub operation;
generating said encoded representations for said variable portion of code which is unique to each of said stub operations; and
storing side encoded representations for said variable portion of code which is unique to each of said stub operations into computer memory.

6. The method described in claim 4, wherein said stub interpreter (158) supplies said first portion of code whenever a stub operation is invoked by a client by a process characterised by the steps of:
recognising a client invocation of a stub operation;
receiving as a part of said client invocation data representing a distinguished object, arguments to said stub operation and a pointer to said encoded representations for said second portion of code which is unique to said invoked stub operation; and
executing said stub operation invoked by a client.

7. The method described in claim 6, wherein said stub operations are object methods.

8. The method as described in claim 1, characterised by the additional steps of executing client operation calls on client-side stubs, for use in a data processing system having a plurality of interactive workstations, each of which workstations may execute client applications that may invoke client-side stubs, said method characterised by the following steps:
using a stub interpreter (158) to contain a copy of said first portion of code, said stub interpreter (158) supplying said first portion of code whenever a stub operation is invoked by a client;
compressing said second portion of code by creating encoded representations of said second portion of code to further reduce said computer memory space required for client-side stubs; and
accessing said second portion of code by said stub interpreter as required whenever a stub operation is invoked by a client.

9. The method described in claim 8, characterised by the additional steps of:
separating code generated to execute a stub operation into a first portion of code as described in claim 1 and a second portion of code as described in claim 1;
executing a client operation call by calling a particular client-side stub operation; and
calling said stub interpreter to execute said client operation by using said encoded representations.

10. The method described in claim 9, wherein said client operation call to a particular client-side stub operation is characterised by the additional steps of:
passing a distinguished object to said stub interpreter (158);
passing arguments of said client operation call to said stub interpreter (158); and
passing a pointer to a data base of encoded representations which represents said second portion of said particular client-side stub operation.

11. The method described in claim 10, wherein said encoded representations of a client-side stub operation is characterised by:
encoded representations for an operation identifier;
encoded representations for a parameter mode and parameter type;
encoded representations for a return type of an operation;
encoded representations for pointers to methods needed to marshal, unmarshal, initialise, and cleanup a parameter and return type; and
encoded representations for each exception and for pointers to raise said exceptions.

12. The method described in claim 11, wherein said stub operations are object methods.

13. A computer system for executing client-side stub operations so as to reduce the amount of memory space required for client-side stubs, characterised by:
a data base of client-side stub operations, said data base generated to contain a second portion of data which is unique to particular client-side stub operations in a compressed form, said second portion of data being stored in a compressed format;
a computer for receiving and storing said data base of client-side stub operations; and
a processor within said computer to execute a client call on a client-side stub operation using said data base of client-side stub operations and a stub interpreter (158), wherein a first portion of data which is a single copy of data which is common to a plurality of stub operations is contained in said stub interpreter (158), and
said processor executing said stub operation at run-time by interpreting said first portion of data and second portion of data without explicit C++ code for a method, argument and exception of said stub operation.

14. The system described in claim 13, further characterised by a stub generator coupled to said computer for converting said second portion of data into encoded representations of said data to further reduce said computer memory space used for storing data for client-side stub operations.

15. The system described in claim 14, wherein said stub interpreter (158) receives said client call on a client-side stub operation and executes said client-side stub operation call by means of said data base of client-side stub operations and said first portion of code.

16. The system described in claim 15, wherein said client call on a client-side stub operations passes information to said stub interpreter which represents;
a distinguished object;
arguments of said client-side stub operation; and
a pointer to encoded representations of said second portion of data of said particular client-side stub operations which was called.

17. The system described in claim 16, wherein said operations are object methods.

18. A system as described in claim 13 for executing a particular stub operation invoked by a client in a computer said system minimising computer memory space required for client-side stubs, each of said client-side stubs characterised by a first potion of code which is common to a plurality of stub operations and a second portion of code which is unique to each of said particular stub operations, said system characterised by:
a stub interpreter (158) which contains a copy of said first portion of code, said stub interpreter supplying said first portion of code whenever said particular stub operation is invoked by a client; and
a computer for storing said second portion of code in a computer memory, said second portion of code being accessed by said stub interpreter as required whenever said particular stub operation is invoked by a client, whereby said computer memory space required for client-side stubs is reduced.

19. The system described in claim 18, further characterised by a stub generator, coupled to said computer, for compressing said second portion of code by creating encoded representations of said second portion of code to further reduce said computer memory space required for client-side stubs.

20. The system described in claim 19, wherein said encoded representations of each stub operation is characterised by:
encoded representations for an operation identifier;
encoded representations for a parameter mode and parameter type;
encoded representations for a return type of an operation;
encoded representations for pointers to methods needed to marshal, unmarshal, initialise, and cleanup a parameter and return type; and
encoded representations for each exception and for pointers to raise said exceptions.

21. The system described in claim 20, wherein said stub generator generates said portion of code tor storage in computer memory by;
reading interface definition language ("IDL") code (150) for a stub operation;
generating said encoded representations for said second portion of code; and storing said encoded representations into computer memory.

22. The system described in claim 21, wherein said stub interpreter (158) supplies said first portion of code whenever a particular stub operation is invoked by a client by:
recognising a client invocation of said particular stub operation;
receiving as a part of said client invocation, data representing a distinguished object, arguments to said particular stub operation and a pointer to said encoded representations for said second portion of code for said invoked stub operation; and
executing said particular stub operation invoked by said client.

23. The system described in claim 22, wherein said stub operations are object methods.

24. The system described in claim 23, wherein said clients, and stubs are objects and said system is an object oriented system.

25. A system having a computer readable medium having a computer program recorded thereon for use in an object oriented system wherein there exists client applications, objects, object type definitions, object implementations and servers, for processing a particular operation invoked on an object by a client operation, said system characterised by:
a data base of encoded data which represents a second portion of code required to execute said particular operation invoked on an object, said second portion of code identified as unique to a particular client-side stub method related to said particular operation which was encoded and stored in computer memory said second portion of code being stored in a compressed format using byte-code representations of various methods, texts, and parameters; and
program code for executing client-side stub operations invoked by said particular client operation request, said program code accessing a first portion of code required to execute said stub operation, said first portion of code identified as a single copy of code which is common to a plurality of different client-side stub operations, and said program code accessing from computer memory said second portion of code to execute the particular stub method invoked by said client operation, said program code executing said client-side stub operation at run-time by interpreting said first portion of data and second portion of data without explicit C++ code for a method, argument and exception of said stub operation.

26. The method described in any of claims 7, 12, 17 or 24 wherein said encoded representations are byte code representations.

27. The system described in claim 25, wherein said encoded data are byte code representations of said data.

## Patentansprüche

1. Ein Verfahren zum Ausführen einer bestimmten Stub-Operation, die von einem Client in einem Computersystem derart aufgerufen wird, daß die für client-seitige Stubs erforderliche Menge des Speicherraums reduziert wird, gekennzeichnet durch die Schritte:
Zugreifen auf einen zum Ausführen der Stub-Operation erforderlichen ersten Befehlscodeabschnitt aus einem ersten Bereich eines Computerspeichers durch Aufrufen eines Stub-Interpreters (158) zum Ausführen der Stub-Operation, wobei der Stub-Interpreter (158) den ersten Codeabschnitt immer dann liefert, wenn die Stub-Operation aufgerufen wird, wobei der erste Befehlscodeabschnitt als einer Mehrzahl unterschiedlicher Stub-Operationen gemeinsam identifiziert ist;
Zugreifen auf einen zum Ausführen der Stub-Operation erforderlichen zweiten Befehlscodeabschnitt aus einem zweiten Bereich des Computerspeichers, wobei der zweite Befehlscodeabschnitt als für die spezielle Stub-Operation einzigartig identifiziert ist, und wobei der zweite Befehlscodeabschnitt in einem komprimierten Format gespeichert wird; und
Ausführen der Stub-Operation zur Laufzeit durch Interpretieren des ersten und des zweiten Befehlscodeabschnitts ohne expliziten C++-Befehlscode für eine Methode, Argument und Ausnahme der Stub-Operation.

2. Das Verfahren nach Anspruch 1, gekennzeichnet durch die zusätzlichen Schritte:
Aufteilen des zum Ausführen einer Stub-Operation erzeugten Befehlscodes in einen ersten Befehlscodeabschnitt, wie er im Anspruch 1 beschrieben ist, und einen zweiten Befehlscodeabschnitt, wie er im Anspruch 1 beschrieben ist;
Verwenden eines Stub-Interpreters (158) zur Aufnahme einer Kopie des ersten Befehlscodeabschnitts, wobei der Stub-Interpreter (158) einen ersten Befehlscodeabschnitt immer dann liefert, wenn eine Stub-Operation durch einen Client aufgerufen wird; und
Zugreifen auf den zweiten Befehlscodeabschnitt durch den Stub-Interpreter (158), wie es immer dann erforderlich ist, wenn eine spezielle Stub-Operation durch einen Client aufgerufen wird.

3. Das Verfahren nach Anspruch 2, wobei der Schritt des Komprimierens des zweiten Befehlscodeabschnitts kodierte Darstellungen des variablen Befehlscodeabschnitts der Stub-Operationen erzeugt, um den für die client-seitigen Stubs erforderlichen Computerspeicherraum weiter zu reduzieren.

4. Das Verfahren nach Anspruch 3, wobei die kodierten Darstellungen jeder Stub-Operation gekennzeichnet sind durch:
kodierte Darstellungen für einen Operationsidentifizierer;
kodierte Darstellungen für einen Parametermodus und einen Parametertyp;
kodierte Darstellungen für einen Rückgabetyp einer Operation;
kodierte Darstellungen für Zeiger auf Methoden, die zum Einreihen (marshal), Ausreihen (unmarshal), Initialisieren und Säubern (clean up) eines Parameters und Rückgabetyps benötigt werden; und
kodierte Darstellungen für jede Ausnahme und für Zeiger, um diese Ausnahmen zu bewirken.

5. Das Verfahren nach Anspruch 4, wobei der Schritt des Erzeugens des für jede der Stub-Operationen einzigartigen variablen Befehlscodeabschnitts, zur Speicherung in dem Computerspeicher gekennzeichnet ist durch die Schritte:
Lesen eines Schnittstellendefinitionssprach(IDL)-Befehlscodes (150) für eine Stub-Operation;
Erzeugen der kodierten Darstellungen für den variablen Befehlscodeabschnitt, welcher für jede der Stub-Operationen einzigartig ist; und
Speichern der kodierten Darstellungen für den für jede der Stub-Operationen einzigartigen variablen Befehlscodeabschnitt in den Computerspeicher.

6. Das Verfahren nach Anspruch 4, wobei der Stub-Interpreter (158) den ersten Abschnitt des Befehlscodes immer dann liefert, wenn eine Stub-Operation durch einen Client durch einen Prozeß aufgerufen wird, gekennzeichnet durch die Schritte:
Erkennen eines Client-Aufrufs einer Stub-Operation;
Empfangen von ein unterscheidbares Objekt darstellenden Daten, von Argumenten für die Stub-Operation und eines Zeigers auf die kodierten Darstellungen für den zweiten Befehlscodeabschnitt, welcher für die aufgerufene Stub-Operation einzigartig ist, als Teil des Client-Aufrufs; und
Ausführen der durch einen Client aufgerufenen Stub-Operation.

7. Das Verfahren nach Anspruch 6, wobei die Stub-Operationen Objektmethoden sind.

8. Das Verfahren nach Anspruch 1, gekennzeichnet durch die zusätzlichen Schritte des Ausführens von Client-Operationsaufrufen auf client-seitigen Stubs zur Verwendung in einem Datenverarbeitungssystem, das eine Mehrzahl von interaktiven Workstations aufweist, wobei jede der Workstations Client-Anwendungen ausführen kann, die client-seitige Stubs aufrufen können, wobei das Verfahren gekennzeichnet ist durch die folgenden Schritte:
Verwenden eines Stub-Interpreters (158) zur Aufnahme einer Kopie des ersten Befehlscodeabschnitts, wobei der Stub-Interpreter (158) den ersten Befehlscodeabschnitt immer dann liefert, wenn eine Stub-Operation durch einen Client aufgerufen wird;
Komprimieren des zweiten Befehlscodeabschnitts, indem kodierte Darstellungen des zweiten Befehlscodeabschnitts erzeugt werden, um den für die client-seitigen Stubs erforderlichen Computerspeicherraum weiter zu reduzieren; und
Zugreifen auf den zweiten Befehlscodeabschnitt durch den Stub-Interpreter (158), wie es immer dann erforderlich ist, wenn eine Stub-Operation durch einen Client aufgerufen wird.

9. Das Verfahren nach Anspruch 8, gekennzeichnet durch die zusätzlichen Schritte:
Aufteilen eines zum Ausführen einer Stub-Operation erzeugten Befehlscodes in einen ersten Befehlscodeabschnitt, wie er im Anspruch 1 beschrieben ist, und einen zweiten Befehlscodeabschnitt, wie er im Anspruch 1 beschrieben ist;
Ausführen eines Client-Operationsaufrufs, indem eine bestimmte client-seitige Stub-Operation aufgerufen wird; und
Aufrufen des Stub-Interpreters, um die Client-Operation durch Verwendung der kodierten Darstellungen auszuführen.

10. Das Verfahren nach Anspruch 9, wobei der Client-Operationsaufruf zu einer bestimmten client-seitigen Stub-Operation gekennzeichnet ist durch die zusätzlichen Schritte:
Weiterleiten eines unterscheidbaren Objekts zu dem Stub-Interpreter (158);
Weiterleiten von Argumenten des Client-Operationsaufrufs zu dem Stub-Interpreter (158); und
Weiterleiten eines Zeigers auf eine Datenbank kodierter Darstellungen, welche den zweiten Abschnitt der bestimmten client-seitigen Stub-Operation darstellen.

11. Das Verfahren nach Anspruch 10, wobei die kodierten Darstellungen einer client-seitigen Stub-Operation gekennzeichnet sind durch:
kodierte Darstellungen für einen Operationsidentifizierer;
kodierte Darstellungen für einen Parametermodus und Parametertyp;
kodierte Darstellungen für einen Rückgabetyp einer Operation;
kodierte Darstellungen für Zeiger auf Methoden, die zum Einreihen (marshal), Ausreihen (unmarshal), Initialisieren und Säubern eines Parameters und Rückgabetyps erforderlich sind; und
kodierte Darstellungen für jede Ausnahme und für Zeiger, um die Ausnahmen zu bewirken.

12. Das Verfahren nach Anspruch 11, wobei die Stub-Operationen Objektmethoden sind.

13. Ein Computer-System zum Ausführen client-seitiger Stub-Operationen derart, daß die für die client-seitigen Stubs erforderliche Menge des Speicherraums reduziert wird, gekennzeichnet durch:
eine Datenbasis client-seitiger Stub-Operationen, wobei die Datenbasis zur Aufnahme eines zweiten Datenabschnitts, welcher für bestimmte client-seitige Stub-Operationen einzigartig ist, in einer komprimierten Form erzeugt wurde, wobei der zweite Datenabschnitt in einem komprimierten Format gespeichert ist;
einen Computer zum Empfangen und Speichern der Datenbasis client-seitiger Stub-Operationen; und
einen Prozessor innerhalb des Computers zum Ausführen eines Client-Aufrufs auf einer client-seitigen Stub-Operation unter Verwendung der Datenbasis client-seitiger Stub-Operationen und eines Stub-Interpreters (158), wobei ein erster Datenabschnitt, welcher eine einzelne Kopie von einer Mehrzahl von Stub-Operationen gemeinsamen Daten ist, in dem Stub-Interpreter (158) enthalten ist, und
wobei der Prozessor die Stub-Operation zur Laufzeit ausführt, indem der erste Datenabschnitt und der zweite Datenabschnitt ohne expliziten C++-Befehlscode für eine Methode, Argument und Ausnahme der Stub-Operation interpretiert werden.

14. Das System nach Anspruch 13, ferner gekennzeichnet durch einen mit dem Computer gekoppelten Stub-Generator zum Konvertieren des zweiten Datenabschnitts in kodierte Darstellungen der Daten, um den Computerspeicherraum, der zum Speichern von Daten für client-seitige Stub-Operationen verwendet wird, weiter zu reduzieren.

15. Das System nach Anspruch 14, wobei der Stub-Interpreter (158) den Client-Aufruf auf einer client-seitigen Stub-Operation empfängt und den client-seitigen Stub-Operationsaufruf mit Hilfe der Datenbasis von client-seitigen Stub-Operationen und dem ersten Datenabschnitt ausführt.

16. Das System nach Anspruch 15, wobei der Client-Aufruf auf einer client-seitigen Stub-Operation Informationen an den Stub-Interpreter weiterleitet, welche darstellen;
ein unterscheidbares Objekt;
Argumente der client-seitigen Stub-Operation; und
einen Zeiger auf kodierte Darstellungen des zweiten Datenabschnitts der speziellen client-seitigen Stub-Operationen, welche aufgerufen wurden.

17. Das System nach Anspruch 16, wobei die Operationen Objektmethoden sind.

18. Ein System nach Anspruch 13 zum Ausführen einer speziellen Stub-Operation, die von einem Client in einem Computer aufgerufen wird, wobei das System den für client-seitige Stubs erforderlichen Computerspeicherraum minimiert, wobei jede der client-seitigen Stubs gekennzeichnet ist durch einen ersten Befehlscodeabschnitt welcher einer Mehrzahl von Stub-Operationen gemeinsam ist, und einen zweiten Befehlscodeabschnitt, welcher für jede der speziellen Stub-Operationen einzigartig ist, wobei das System gekennzeichnet ist durch:
einen Stub-Interpreter (158), welcher eine Kopie des ersten Befehlscodeabschnitts enthält, wobei der Stub-Interpreter den ersten Befehlscodeabschnitt immer dann liefert, wenn die spezielle Stub-Operation von einem Client aufgerufen wird; und
einen Computer zum Speichern des zweiten Befehlscodeabschnitts in einem Computerspeicher, wobei auf den zweiten Befehlscodeabschnitt durch den Stub-Interpreter zugegriffen wird, wie es immer dann erforderlich ist, wenn die spezielle Stub-Operation von einem Client aufgerufen wird, wodurch der für client-seitige Stubs erforderliche Computerspeicherraum reduziert wird.

19. Das System nach Anspruch 18, ferner gekennzeichnet durch einen mit dem Computer gekoppelten Stub-Generator zum Komprimieren des zweiten Befehlscodeabschnitts, indem kodierte Darstellungen des zweiten Befehlscodeabschnitts erzeugt werden, um den für client-seitige Stubs erforderlichen Computerspeicherraum zu reduzieren.

20. Das System nach Anspruch 19, wobei die kodierten Darstellungen jeder Stub-Operation gekennzeichnet sind durch:
kodierte Darstellungen für einen Operationsidentifizierer;
kodierte Darstellungen für einen Parametermodus und Parametertyp;
kodierte Darstellungen für einen Rückgabetyp einer Operation;
kodierte Darstellungen für Zeiger auf Methoden, die zum Einreihen, Ausreihen, Initialisieren und Säubern eines Parameters und Rückgabetyps benötigt werden; und
kodierte Darstellungen für jede Ausnahme und für Zeiger, um die Ausnahmen zu bewirken.

21. Das System nach Anspruch 20, wobei der Stub-Generator den Befehlscodeabschnitt zur Speicherung im Computerspeicher erzeugt, indem
ein Schnittstellendefinitionssprach(IDL)-Befehlscode (150) für eine Stub-Operation gelesen wird;
die kodierten Darstellungen für den zweiten Befehlscodeabschnitt erzeugt werden; und
die kodierten Darstellungen in den Computerspeicher gespeichert werden.

22. Das System nach Anspruch 21, wobei der Stub-Interpreter (158) den ersten Befehlscodeabschnitt immer dann liefert, wenn eine bestimmte Stub-Operation von einem Client aufgerufen wird, indem
ein Client-Aufruf der speziellen Stub-Operation erkannt wird;
Daten, die ein unterscheidbares Objekt, Argumente für die spezielle Stub-Operation und einen Zeiger auf die kodierten Darstellungen für den zweiten Befehlscodeabschnitt der aufgerufenen Stub-Operation repräsentieren, als Teil des Client-Aufrufs empfangen werden; und
die von dem Client aufgerufene spezielle Stub-Operation ausgeführt wird.

23. Das System nach Anspruch 22, wobei die Stub-Operationen Objektmethoden sind.

24. Das System nach Anspruch 23, wobei die Clients und Stubs Objekte sind und das System ein objekt-orientiertes System ist.

25. Ein System, das ein computerlesbares Medium umfaßt, auf dem ein Computerprogramm zur Verwendung in einem objekt-orientierten System aufgezeichnet ist, wobei in dem System Client-Anwendungen, Objekte, Objekttypdefinitionen, Objektimplementierungen und Server vorhanden sind, wobei das System zum Verarbeiten einer speziellen Operation dient, die auf einem Objekt von einer Client-Operation aufgerufen wird, wobei das System gekennzeichnet ist durch:
eine Datenbasis kodierter Daten, welche einen zweiten Befehlscodeabschnitt repräsentieren, der zum Ausführen der speziellen an einem Objekt aufgerufenen Operation erforderlich ist, wobei der zweite Befehlscodeabschnitt als für eine sich auf die spezielle Operation beziehende spezielle client-seitige Stub-Methode einzigartig identifiziert wird, welche kodiert und im Computerspeicher gespeichert wurde, wobei der zweite Befehlscodeabschnitt in einem komprimierten Format unter Verwendung von Byte-Code-Darstellungen verschiedener Methoden, Texte und Parameter gespeichert wird; und
Programmbefehlscode zum Ausführen client-seitiger Stub-Operationen, die von den speziellen Client-Operationsanforderungen aufgerufen sind, wobei der Programmbefehlscode auf einen zum Ausführen der Stub-Operation erforderlichen ersten Befehlscodeabschnitt zugreift, wobei der erste Befehlscodeabschnitt als eine für eine Mehrzahl unterschiedlicher client-seitiger Stub-Operationen gemeinsame einzige Kopie von Befehlscode identifiziert ist, und wobei der Programmbefehlscode auf den zweiten Befehlscodeabschnitt aus dem Computerspeicher zugreift, um die spezielle Stub-Methode auszuführen, die von der Client-Operation aufgerufen ist, wobei der Programmbefehlscode die client-seitige Stub-Operation zur Laufzeit ausführt, indem der erste Datenabschnitt und der zweite Datenabschnitt ohne expliziten C++-Befehlscode für eine Methode, Argument und Ausnahme der Stub-Operation interpretiert wird.

26. Das Verfahren nach einem der Ansprüche 7, 12, 17 oder 24, wobei die kodierten Darstellungen Byte-Codedarstellungen sind.

27. Das System nach Anspruch 25, wobei die kodierten Daten Byte-Codedarstellungen der Daten sind.

## Revendications

1. Procédé pour l'exécution d'une opération particulière de mandataire appelée par un client dans un système informatique de façon à réduire la quantité d'espace en mémoire requise par les mandataires du côté client, caractérisé par les étapes suivantes :
- l'accès à partir d'une première zone de la mémoire d'ordinateur à une première partie de code requise pour exécuter ladite opération de mandataire par appel d'un interpréteur de mandataire (158) pour exécuter ladite opération de mandataire, ledit interpréteur de mandataire (158) fournissant ladite première partie de code toutes les fois que ladite opération de mandataire est appelée, ladite première partie de code étant identifiée comme étant commune à une pluralité de différentes opérations de mandataire ;
- l'accès à partir d'une seconde zone de la mémoire d'ordinateur à une seconde partie du code requise pour exécuter ladite opération de mandataire, ladite seconde partie de code étant identifiée comme étant unique pour ladite opération particulière de mandataire, et ladite seconde partie de code étant stockée sous un format comprimé ; et
- l'exécution de ladite opération de mandataire au moment de l'exécution par interprétation desdites première et seconde parties de code sans code C++ explicite pour une procédure, un argument et une exception de ladite opération de mandataire.

2. Procédé selon la revendication 1, caractérisé par les étapes additionnelles suivantes :
- la séparation du code généré pour exécuter une opération de mandataire en une première partie de code selon la revendication 1 et en une seconde partie de code selon la revendication 1 ;
- l'utilisation d'un interpréteur de mandataire (158) pour contenir une copie de ladite première partie de code, ledit interpréteur de mandataire (158) fournissant ladite première partie de code toutes les fois qu'une opération de mandataire est appelée par un client ; et
- l'accès à ladite seconde partie de code par ledit interpréteur de mandataire (158) comme requis toutes les fois qu'une opération particulière de mandataire est appelée par un client.

3. Procédé selon la revendication 2, selon lequel l'étape de compression de ladite seconde partie de code crée des représentations codées de ladite partie variable de code desdites opérations de mandataire afin de réduire, de plus, ledit espace de mémoire d'ordinateur requis pour les mandataires du côté client.

4. Procédé selon la revendication 3, selon lequel lesdites représentations codées de chaque opération de mandataire sont caractérisées par :
- des représentations codées pour un identificateur d'opération ;
- des représentations codées pour un mode de paramètre et un type de paramètre ;
- des représentations codées pour un type de retour d'une opération ;
- des représentations codées pour des pointeurs sur des procédures requises pour classer, déclasser, initialiser et effacer un type de paramètre et de retour ; et
- des représentations codées pour chaque exception et pour des pointeurs soulevant lesdites exceptions.

5. Procédé selon la revendication 4, selon lequel ladite étape de génération de ladite partie variable de code qui est unique pour chacune desdites opérations de mandataire pour un stockage dans la mémoire d'ordinateur est caractérisée par les étapes suivantes :
- la lecture du code de langage de définition d'interface ("IDL") (150) pour une opération de mandataire ;
- la génération desdites représentations codées pour ladite partie variable de code qui est unique à chacune desdites opérations de mandataire ; et
- le stockage des représentations codées secondaires pour ladite partie variable de code qui est unique à chacune desdites opérations de mandataire dans la mémoire d'ordinateur.

6. Procédé selon la revendication 4, selon lequel ledit interpréteur de mandataire (158) fournit ladite première partie de code toutes les fois qu'une opération de mandataire est appelée par un client selon un processus caractérisé par les étapes suivantes :
- la reconnaissance d'un appel de client d'une opération de mandataire ;
- la réception en tant que partie desdites données d'appel de client représentant un objet distingué d'arguments pour ladite opération de mandataire et d'un pointeur sur lesdites représentations codées pour ladite seconde partie de code qui est unique pour ladite opération appelée de mandataire ; et
- l'exécution de ladite opération de mandataire appelée par un client.

7. Procédé selon la revendication 6, selon lequel lesdites opérations de mandataire sont des procédures objets.

8. Procédé selon la revendication 1, caractérisé par les étapes additionnelles d'exécution d'appels d'opération client sur des mandataires du côté client pour une utilisation dans un système de traitement de données possédant une pluralité de postes de travail interactifs, chacun des postes de travail pouvant exécuter les applications du côté client pouvant faire appel à des mandataires du côté client, ledit procédé étant caractérisé par les étapes suivantes :
- l'utilisation d'un interpréteur de mandataire (158) pour contenir une copie de ladite première partie de code, ledit interpréteur de mandataire (158) fournissant ladite première partie de code toutes les fois qu'une opération de mandataire est appelée par un client ;
- la compression de ladite seconde partie de code en créant des représentations codées de ladite seconde partie de code afin de réduire, de plus, ledit espace en mémoire d'ordinateur requis par les mandataires du côté client ; et
- l'accès à ladite seconde partie de code par ledit interpréteur de mandataire (158) comme requis toutes les fois qu'une opération de mandataire est appelée par un client.

9. Procédé selon la revendication 8, caractérisé par les étapes additionnelles suivantes :
- la séparation du code généré pour exécuter une opération de mandataire en une première partie de code selon la revendication 1 et une seconde partie de code selon la revendication 1 ;
- l'exécution d'un appel d'opération client en appelant une opération particulière de mandataire du côté client ; et
- l'appel dudit interpréteur de mandataire pour exécuter ladite opération client en utilisant lesdites représentations codées.

10. Procédé selon la revendication 9, selon lequel ledit appel d'opération client pour une opération particulière de mandataire du côté client est caractérisée par les étapes additionnelles suivantes :
- le passage d'un objet distingué dans ledit interpréteur de mandataire (158) ;
- le passage d'arguments dudit appel d'opération client dans ledit interpréteur de mandataire (158) ; et
- le passage d'un pointeur dans une base de données de représentations codées représentant ladite seconde partie de ladite opération particulière de mandataire du côté client.

11. Procédé selon la revendication 10, selon lequel lesdites représentations codées d'une opération de mandataire du côté client sont caractérisées :
- des représentations codées pour un identificateur d'opération ;
- des représentations codées pour un mode de paramètre et un type de paramètre ;
- des représentations codées pour un type de retour d'une opération ;
- des représentations codées pour des pointeurs sur des procédures requises pour classer, déclasser, initialiser et effacer un type de paramètre et de retour ; et
- des représentations codées pour chaque exception et pour des pointeurs soulevant lesdites exceptions.

12. Procédé selon la revendication 11, selon lequel lesdites opérations de mandataire sont des procédures objets.

13. Système informatique pour l'exécution d'opérations de mandataire du côté client de façon à réduire la quantité d'espace en mémoire requise pour des mandataires du côté client, caractérisé par :
- une base de données d'opérations de mandataire du côté client, ladite base de données étant générée pour contenir une seconde partie de données qui est unique pour des opérations particulières de mandataire du côté client sous une forme comprimée, ladite seconde partie des données étant stockée sous un format comprimé ;
- un ordinateur pour recevoir et stocker ladite base de données des opérations de mandataire du côté client ; et
- un processeur dans ledit ordinateur pour exécuter un appel de client sur une opération de mandataire du côté client à l'aide de ladite base de données des opérations de mandataire du côté client et un interpréteur de mandataire (158), dans lequel une première partie des données qui est une copie unique des données commune à une pluralité d'opérations de mandataire est contenue dans ledit interpréteur de mandataire (158) ; et
ledit processeur exécutant ladite opération de mandataire en cours d'exécution par interprétation de ladite première partie des données et de ladite seconde partie des données sans code C++ explicite pour une procédure, un argument et une exception de ladite opération de mandataire.

14. Système selon la revendication 13, caractérisé, de plus, par un générateur de mandataire couplé audit ordinateur pour convertir ladite seconde partie des données en représentations codées desdites données afin de réduire, de plus, ledit espace en mémoire d'ordinateur utilisé pour le stockage des données pour des opérations de mandataire du côté client.

15. Système selon la revendication 14, dans lequel ledit interpréteur de mandataire (158) reçoit ledit appel de client sur une opération de mandataire du côté client et exécute ledit appel d'opération de mandataire du côté client au moyen de ladite base de données d'opérations de mandataire du côté client et de ladite première partie de code.

16. Système selon la revendication 15, dans lequel ledit appel de client sur une opération de mandataire du côté client passe une information dans ledit interpréteur de mandataire qui représente :
- un objet distingué ;
- des arguments de ladite opération de mandataire du côté client ; et
- un pointeur sur des représentations codées de la seconde partie de données desdites opérations particulières de mandataire du côté client qui a été appelée.

17. Système selon la revendication 16, dans lequel lesdites opérations sont des procédures objets.

18. Système selon la revendication 13, pour l'exécution d'une opération particulière de mandataire appelée par un client dans un ordinateur, ledit système minimisant l'espace en mémoire d'ordinateur requis par des mandataires du côté client, chacun desdits mandataires du côté client étant caractérisé par une première partie de code qui est commune à une pluralité d'opérations de mandataire et une seconde partie de code qui est unique pour chacune desdites opérations particulières de mandataire, ledit système étant caractérisé par :
- un interpréteur de mandataire (158) contenant une copie de ladite première partie de code, ledit interpréteur de mandataire (158) fournissant ladite première partie de code toutes les fois que ladite opération particulière de mandataire est appelée par un client ; et
- un ordinateur pour stocker la seconde partie de code dans une mémoire d'ordinateur, ladite seconde partie de code étant lue par ledit interpréteur de mandataire comme requis toutes les fois que ladite opération particulière de mandataire est appelée par un client, ledit espace en mémoire d'ordinateur requis par des mandataires du côté client étant ainsi réduit.

19. Système selon la revendication 18, caractérisé, de plus, par un générateur de mandataire, couplé audit ordinateur, pour comprimer ladite seconde partie de code en créant des représentations codées de ladite seconde partie de code afin de réduire, de plus, ledit espace en mémoire d'ordinateur requis par des mandataires du côté client.

20. Système selon la revendication 19, dans lequel lesdites représentations codées de chaque opération de mandataire sont caractérisées par :
- des représentations codées pour un identificateur d'opération ;
- des représentations codées pour un mode de paramètre et un type de paramètre ;
- des représentations codées pour un type de retour d'une opération ;
- des représentations codées pour des pointeurs sur des procédures requises pour classer, déclasser, initialiser et effacer un type de paramètre et de retour ; et
- des représentations codées pour chaque exception et pour des pointeurs soulevant lesdites exceptions.

21. Système selon la revendication 20, dans lequel ledit générateur de mandataire génère ladite partie de code pour un stockage dans une mémoire d'ordinateur par :
- lecture du code de langage de définition d'interface ("IDL") (150) pour une opération de mandataire ;
- génération desdites opérations codées pour ladite seconde partie de code ; et
- stockage desdites représentations codées dans la mémoire d'ordinateur.

22. Système selon la revendication 21, dans lequel ledit interpréteur de mandataire (158) fournit ladite première partie de code toutes les fois qu'une opération particulière de mandataire est appelée par un client par :
- reconnaissance d'un appel de client de ladite opération particulière de mandataire ;
- réception en tant que partie dudit appel de client de données représentant un objet distingué, des arguments pour ladite opération particulière de mandataire et un pointeur sur lesdites représentations codées pour ladite seconde partie de code de ladite opération de mandataire appelée ; et
- exécution de ladite opération particulière de mandataire appelée par ledit client.

23. Système selon la revendication 22, dans lequel lesdites opérations de mandataire sont des procédures objets.

24. Système selon la revendication 23, dans lequel lesdits clients et mandataires sont des objets et ledit système est un système orienté objet.

25. Système possédant un support informatique pouvant être lu, un programme informatique étant enregistré dessus pour une utilisation dans un système orienté objet dans lequel on trouve des applications de client, des objets, des définitions de type d'objet, des mises en oeuvre d'objet et des serveurs, pour le traitement d'une opération particulière appelée sur un objet par une opération de client, ledit système étant caractérisé par :
- une base de données codées représentant une seconde partie de code requise pour exécuter ladite opération particulière appelée sur un objet, ladite seconde partie de code étant identifiée comme étant unique pour une procédure particulière de mandataire du côté client lié à ladite opération particulière qui a été codée et stockée dans une mémoire d'ordinateur, ladite seconde partie de code étant stockée sous un format comprimé à l'aide de représentations de code par octet de divers procédures, textes et paramètres ; et
- un code informatique pour exécuter des opérations de mandataire du côté client appelées par ladite demande particulière d'opération de client, ledit code informatique lisant une première partie de code requise pour exécuter ladite opération de mandataire, ladite première partie de code étant identifiée comme une copie unique de code commune à une pluralité de différentes opérations de mandataire du côté client, et ledit code informatique lisant à partir de la mémoire d'ordinateur ladite seconde partie de code pour exécuter la procédure particulière de mandataire appelé par ladite opération de client, ledit code informatique exécutant ladite opération de mandataire du côté client en cours d'exécution en interprétant ladite première partie des données et ladite seconde partie des données sans code C++ explicite pour une procédure, un argument et une exception de ladite opération de mandataire.

26. Procédé selon l'une quelconque des revendications 7, 12, 17 ou 24, selon lequel lesdites représentations codées sont des représentations de code par octet.

27. Système selon la revendication 25, dans lequel lesdites données codées sont des représentations de code par octet desdites données.
